# EUROPEAN PATENT APPLICATION

(11) **EP 4 439 791 A2**
(43) Date of publication of application: **02.10.2024**
(21) Application number: 24167932.3
(22) Date of filing: 29.03.2024
(51) Int. Cl.: H01M 10/48, H01M 50/209, H01M 50/50, H01M 50/569

(54) **BATTERY MODULE AND ELECTRIC DEVICE**

(30) Priority: 31.03.2023 CN 202310341085
(71) Applicant: Xiamen Ampack Technology Limited, Xiamen City, Fujian Province 361000 (CN)
(72) Inventor: NONG, Wenbin, Xiamen City, Fujian Province 361000 (CN); LI, Kunlong, Xiamen City, Fujian Province 361000 (CN); WANG, Pengfei, Xiamen City, Fujian Province 361000 (CN)
(74) Representative: Icosa

(57) **Abstract**

A battery module (100) includes an acquisition assembly (20) and a plurality of cell units (100) arranged along a first direction (X). Each of the cell units (100) includes a battery cell (11) and a bracket (12). The battery cell (11) includes an electrode assembly (11b), a cell housing (11a), and an electrode terminal (11c). The cell housing (11a) includes a body portion (111) and a first sealing portion (112), the electrode assembly (11b) is disposed in the body portion (111). The first sealing portion (112) includes a first connecting portion (112a). The bracket (12) includes a first portion (121). The first portion (121) covers a part of the first connecting portion (112a), the electrode terminal (11c) extends out of the first portion (121). The acquisition assembly (20) includes a lead (21) and a plurality of sampling parts (22). The lead (21) is connected to each of the sampling parts (22). The electrode terminals (11c) of two adjacent battery cells (11) are stacked and connected. The sampling part (22) is connected to any one of the interconnected electrode terminals (11c).

## Description

### TECHNICAL FIELD

This application relates to the field of energy storage technologies, and in particular, to a battery module and an electric device.

### BACKGROUND

Battery modules are currently widely used in various fields such as unmanned aerial vehicles, electric vehicles, and smart energy storage devices. Currently, in a battery module, information about the battery module is collected through a circuit board, leading to complex assembly processes, increased costs, and unfavorable production conditions.

### SUMMARY

In view of this, it is necessary to provide a battery module and an electric device so as to reduce process steps and save materials.

Some embodiments of this application provide a battery module, which includes a plurality of cell units arranged along a first direction and an acquisition assembly. Each of the cell units includes a battery cell and a bracket. The battery cell includes an electrode assembly, a cell housing, and an electrode terminal, the electrode terminal being connected to the electrode assembly and extends out of the cell housing. The cell housing includes a body portion and a first sealing portion, and the electrode assembly is disposed in the body portion. The first sealing portion includes a first connecting portion, and the electrode terminal extends out of the cell housing from the first connecting portion. The bracket includes a first portion. The first portion covers a part of the first connecting portion, and the electrode terminal extends out of the first portion. The acquisition assembly includes a lead and a plurality of sampling parts. The lead is connected to each of the sampling parts. The electrode terminals of two adjacent battery cells are stacked and connected. The sampling part is connected to any one of the interconnected electrode terminals. Sampling through connection between a sampling part and an electrode terminal can reduce process steps, save materials, and enhance the toughness of the first connecting portion through covering the first connecting portion with the first portion, facilitating a better connection of the sampling part to the electrode terminal.

Optionally, in some embodiments of this application, the bracket of at least one of the plurality of cell units include a second portion. A part of the electrode terminal and the second portion are arranged along the first direction, the sampling part being connected to the second portion and the electrode terminal, which facilitates the connection to the electrode terminal and improves the connection stability of the sampling part and the electrode terminal.

Optionally, in some embodiments of this application, the second portion is connected to the first portion. The first portion and the second portion are arranged along a second direction, the second direction being perpendicular to the first direction. Along the first direction, one side of the sampling part is connected to any one of the interconnected electrode terminals, and another side of the sampling part is connected to the second portion, which is conducive for connecting to the sampling part.

Optionally, in some embodiments of this application, the second portion is provided with a step portion. The step portion includes a first step surface and a second step surface. Along the first direction, the first step surface has a thickness less than a thickness of the second step surface. Along the first direction, a projection of the electrode terminal overlaps a projection of the first step surface, the projection of the electrode terminal is spaced apart from a projection of the second step surface, and the sampling part is connected to the step portion. This can improve the strength of connection between the sampling part and the second portion and reduce the risk of the sampling part detaching from the second portion.

Optionally, in some embodiments of this application, the second portion is provided with a flat portion. The flat portion is connected to any one of the interconnected electrode terminals, and a part of the electrode terminal is disposed between the flat portion and the sampling part. The part of the electrode terminal is spread flat relative to the flat portion, reducing the wrinkles of the electrode terminal and contributing to the protection of the electrode terminal.

Optionally, in some embodiments of this application, the sampling part includes a first component and a second component. Along the first direction, the first component is connected to the second portion, and the second component is connected to any one of the interconnected electrode terminals, which is conducive to connecting the second portion to the electrode terminal.

Optionally, in some embodiments of this application, the first component includes a first segment. The second component includes a second segment. The first segment is bent toward the second segment. The second segment is flat. The first segment is connected to the first step surface, and the second segment is connected to the flat portion. This increases the area of contact between the second segment and the electrode terminal, conducive to enhancing the strength of connection between the second segment and the electrode terminal.

Optionally, in some embodiments of this application, the first component includes a first segment. The second component includes a second segment. The first segment is bent toward the second segment. The second segment is bent toward the first segment. The first segment is connected to the first step surface, and the second segment is connected to the flat portion. This enhances the clamping force between the first segment and the second segment, which is conducive to improving the strength of connection between the sampling part and the second portion, thereby further improving the strength of connection between the sampling part and the electrode terminal.

Optionally, in some embodiments of this application, the first component includes a third segment. The third segment is connected to the first segment. The third segment is provided with a first curved portion, and the step portion is provided with a first limiting portion. The first curved portion is disposed in the first limiting portion, and the first curved portion is configured to restrict the sampling part from detaching from the second portion. This can improve the strength of connection between the sampling part and the second portion.

Optionally, in some embodiments of this application, the second component includes a fourth segment. The fourth segment is connected to the second segment. The fourth segment is provided with a second curved portion. The flat portion is provided with a second limiting portion. The second curved portion is disposed in the second limiting portion, and the second curved portion is configured to restrict the sampling part from detaching from the second portion. This can further improve the strength of connection between the sampling part and the second portion.

Optionally, in some embodiments of this application, the first limiting portion is disposed on the second step surface. Along a third direction, the second limiting portion is disposed on a part of the flat portion extending beyond the electrode terminal, thus reducing the interference between the first limiting portion and the electrode terminal and reducing the risk that the first curved portion presses the electrode terminal against the first limiting portion and the second curved portion presses the electrode terminal against the second limiting portion. The first direction, the second direction, and the third direction are perpendicular to each other.

Optionally, in some embodiments of this application, the bracket includes a third connecting portion. The third connecting portion is connected to the second portion. The third connecting portion is connected to the first portion. Along the first direction, the third connecting portion is connected to a part of the electrode terminal extending out of the cell housing, providing support for the electrode terminal extending out of the first connecting portion. This is conducive to the bending connection of the electrode terminals of two adjacent battery cells.

Optionally, in some embodiments of this application, the sampling part is clamped between the second portion and the electrode terminal, which is conducive to connecting to the second portion and the electrode terminal.

Optionally, in some embodiments of this application, the sampling part is welded to any one of the electrode terminals interconnected with each other, which can improve the strength of connection between the sampling part and the electrode terminal.

Optionally, in some embodiments of this application, along the second direction, a projection of the second portion is located within a projection of the first portion.

Optionally, in some embodiments of this application, the first sealing portion includes a first bent portion and a second bent portion. The first bent portion is connected to the second bent portion through the first connecting portion. The bracket includes a first side portion covering the first bent portion and a second side portion covering the second bent portion, and the first side portion and the second side portion are arranged along a third direction, the third direction being perpendicular to both the first direction and a second direction. This provides protection for the first sealing portion.

Optionally, in some embodiments of this application, when viewed along the first direction, in the second direction, a part of the first connecting portion is located between the body portion and the first portion; and in the third direction, a part of the first connecting portion is located between the first side portion and the second side portion. Through the covering of a part of the first connecting portion with the bracket, additional protection for the first sealing portion is provided. Through the provision of a part of the first connecting portion between the body portion and the first portion as well as between the first side portion and the second side portion, a space for swelling is provided for the first sealing portion, facilitating pressure relief and reducing the impact of pressure within the battery cell on the first connecting portion. This, in turn, reduces the impact on the sealing performance of the first sealing portion and is conducive to heat dissipation of the first sealing portion.

Optionally, in some embodiments of this application, the body portions of adjacent battery cells are in contact connection with each other. Adjacent battery cells apply pressure to each other through the body portions. This can reduce the force applied on the first sealing portion, improving protection for the first sealing portion. Moreover, the number of buffer members between adjacent battery cells that provide swelling space for the battery cells can be reduced, decreasing the space occupied, and thereby improving the energy density of the battery module.

Optionally, in some embodiments of this application, the cell housing includes a first wall, a second wall, a third wall, and a fourth wall. The second wall and the first wall are disposed opposite to each other along the second direction. The third wall and the fourth wall are disposed opposite to each other along the first direction. When viewed along a direction opposite to the second direction, the first portion does not extend beyond the third wall in the first direction, and the first portion does not extend beyond the fourth wall in the first direction. When body portions of adjacent battery cells apply pressure to each other, the force applied on the first sealing portion can be reduced, improving protection for the first sealing portion.

Optionally, in some embodiments of this application, the electrode assembly has a wound structure, including a first straight section, a second straight section, a first curved section, and a second curved section. The first straight section is connected to the first curved section and the second curved section. The second straight section is connected to the first curved section and the second curved section. Along the first direction, a projection of the third wall covers a projection of the first straight section, and a projection of the fourth wall covers a projection of the second straight section. This is conducive to even application of pressures among the battery cells, further improving the service life of the battery cells.

Optionally, in some embodiments of this application, the bracket is integrally formed with the battery cell, which can improve the strength of connection between the bracket and the battery cell.

Optionally, in some embodiments of this application, the bracket is an insulating bracket, which can reduce the risk of short circuit between the bracket and the battery cell.

Optionally, in some embodiments of this application, the sampling part is fixed to the first portion.

Optionally, in some embodiments of this application, the body portion includes two first sealing portions. The two first sealing portions are arranged along the second direction. The battery cell includes two electrode terminals. The sampling part is connected to the electrode terminals, of two adjacent battery cells, which are stacked and connected, where the electrode terminals extend out of the first sealing portion along the second direction. The sampling part is connected to the electrode terminals, of two adjacent battery cells, which are stacked and connected, where the electrode terminals extend out of the other first sealing portion along a direction opposite to the second direction.

Optionally, in some embodiments of this application, when viewed along a direction opposite to the second direction, in the first direction, the first side portion is located between the third wall and the fourth wall. When body portions of adjacent battery cells apply pressure to each other, the force applied on the first sealing portion can be reduced, improving protection for the first sealing portion.

Optionally, in some embodiments of this application, when viewed along a direction opposite to the second direction, in the first direction, the second side portion is located between the third wall and the fourth wall. When body portions of adjacent battery cells apply pressure to each other, the force applied on the first sealing portion can be reduced, improving protection for the first sealing portion.

Optionally, in some embodiments of this application, along the second direction, a projection of the first side portion overlaps a projection of the first curved section; the projection of the first side portion is spaced apart from a projection of the first straight section; and the projection of the first side portion is spaced apart from a projection of the second straight section. This is conducive to pressure relief.

Optionally, in some embodiments of this application, along the second direction, a projection of the second side portion overlaps a projection of the second curved section; the projection of the second side portion is spaced apart from a projection of the first straight section; and the projection of the second side portion is spaced apart from a projection of the second straight section. This is conducive to pressure relief.

Optionally, in some embodiments of this application, the bracket includes a first extension portion, where the first extension portion extends from the first side portion. The first extension portion can protect the fifth wall and the second sealing portion, increasing the strength of connection between the bracket and the battery cell.

Optionally, in some embodiments of this application, the bracket includes a second extension portion, where the second extension portion extends from the second side portion. The second extension portion can protect the sixth wall and another second sealing portion, which can increase the strength of connection between the bracket and the battery cell and facilitate the integral forming of the bracket with the battery cell.

Optionally, in some embodiments of this application, when viewed along a direction opposite to the second direction, the first side portion does not extend beyond the first extension portion in the first direction, and a first gap is formed between adjacent first side portions. When adjacent body portions are in contact connection and apply pressure to each other, the force applied on the first side portion can be reduced, thereby further decreasing the force applied to the first sealing portion, which is beneficial for protecting the first sealing portion. The first gap also facilitates the heat dissipation of the battery cell.

Optionally, in some embodiments of this application, when viewed along a direction opposite to the second direction, the second side portion does not extend beyond the second extension portion in the first direction, and a second gap is formed between adjacent second side portions. When adjacent body portions are in contact connection and apply pressure to each other, the second gap can reduce the force applied on the second side portion, thereby further decreasing the force applied to the first sealing portion, which is beneficial for protecting the first sealing portion. The second gap also facilitates the heat dissipation of the battery cell.

Optionally, in some embodiments of this application, the battery module further includes an elastic member. The elastic member includes a base portion, a third bent portion, and a fourth bent portion. The third bent portion is connected to the fourth bent portion through the base portion. The base portion is configured to be able to provide pressure to the cell unit. The third bent portion and the fourth bent portion are configured to provide a space for swelling of the cell unit, buffering the pressure applied to the cell unit and reducing influence on the service life of the battery module. Pressure is continuously applied to the cell unit via the base portion, and the cell unit is in a pressed state and kept in dynamic balance, helping to prolong the service life of the battery module.

Optionally, in some embodiments of this application, the elastic member includes a first connecting section. The first connecting section is connected to a side of the third bent portion far away from the base portion. The first connecting section is fixed to the housing, so that a force applied to the third bent portion can be transferred to the housing.

Optionally, in some embodiments of this application, the first connecting section is parallel to the base portion, which is conducive to the deformation of the elastic member in the first direction.

Optionally, in some embodiments of this application, the third bent portion includes a first bent section and a second bent section. The first bent section is connected to the base portion and the second bent section. The second bent section is connected to the first connecting section.

Optionally, in some embodiments of this application, the first bent section forms a first included angle A₁ with the base portion. The second bent section forms a second included angle B₁ with the first connecting section, where A1 ≥ B₁. This is conducive to increasing the resistance to deformation of the first bent section and helps reduce the risk of deformation of the elastic member in the first direction.

Optionally, in some embodiments of this application, the first bent section and the second bent section form a third included angle C₁, and C₁ > A₁, helping to improve uniformity of deformation of the third bent portion.

Optionally, in some embodiments of this application, C₁ = 2A₁ = 2B₁, helping to further improve the uniformity of the deformation of the third bent portion.

Optionally, in some embodiments of this application, the housing includes a first side wall. The first side wall is provided with a first fixing portion. Along the first direction, a projection of the first connecting section overlaps a projection of the first fixing portion. The first connecting section is fixed to the first fixing portion, and the force applied to the bent portion can be transferred to the first side wall.

Optionally, in some embodiments of this application, the structural strength of the first side wall is higher than the structural strength of the elastic member, reducing the risk of deformation of the first side wall caused by the force applied to the third bent portion.

Optionally, in some embodiments of this application, the elastic member includes a second connecting section. The second connecting section is connected to a side of the fourth bent portion far away from the base portion. The second connecting section is fixed to the housing, so that a force applied to the fourth bent portion can be transferred to the housing.

Optionally, in some embodiments of this application, the second connecting section is parallel to the base portion, which is conducive to the deformation of the elastic member in the first direction.

Optionally, in some embodiments of this application, the housing includes a bottom wall. The bottom wall is provided with a third fixing portion. Along the first direction, a projection of the second connecting section overlaps a projection of the third fixing portion. The second connecting section is fixed to the third fixing portion, and the force applied to the bent portion can be transferred to the bottom wall.

Optionally, in some embodiments of this application, the structural strength of the bottom wall is higher than the structural strength of the elastic member, reducing the risk of deformation of the bottom wall caused by the force applied to the fourth bent portion.

Optionally, in some embodiments of this application, the third bent portion and the fourth bent portion are the same in structure, facilitating uniformity of stress and deformation.

An embodiment of this application further provides an electric device, including the battery module according to any one of the foregoing embodiments.

In the foregoing battery modules and electric devices, sampling is performed through connection between a sampling part and an electrode terminal. This can reduce process steps, save materials, and enhance the toughness of the first connecting portion through covering the first connecting portion with the first portion, facilitating a better connection of the sampling part to the electrode terminal.

### BRIEF DESCRIPTION OF DRAWINGS

FIG. 1 is a schematic exploded view of a battery module in some embodiments.
FIG. 2 is a partial schematic structural diagram of a battery module in some embodiments.
FIG. 3 is an enlarged schematic diagram of a part of the battery module in FIG. 2.
FIG. 4 is a partial schematic structural diagram of a battery module from another perspective in some embodiments.
FIG. 5 is a partial schematic structural diagram of a battery module from still another perspective in some embodiments.

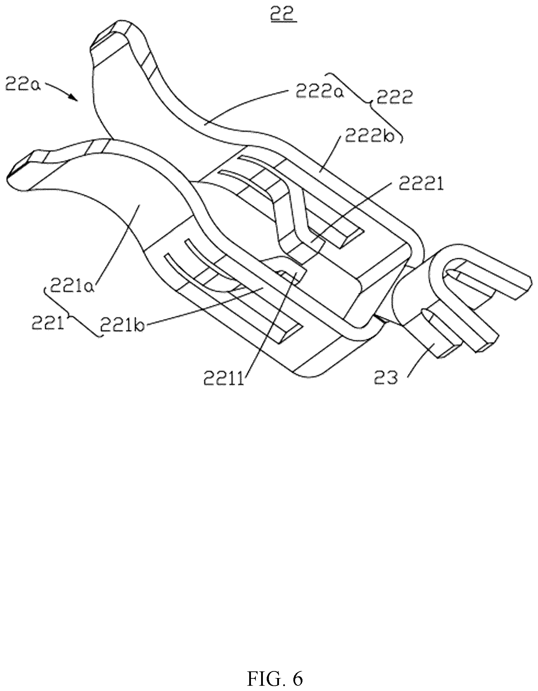

FIG. 6 is a schematic structural diagram of a sampling part in some embodiments.

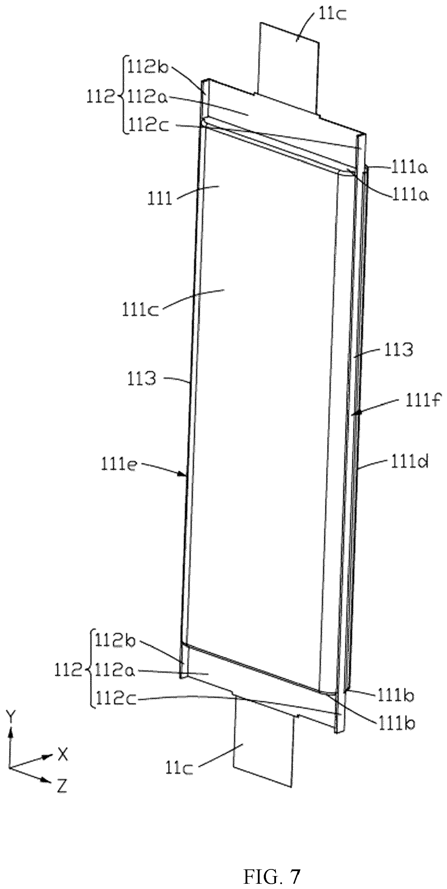

FIG. 7 is a schematic structural diagram of a battery cell in some embodiments.
FIG. 8 is a schematic structural diagram of a battery cell viewed along a direction Y' opposite to a second direction Y in some embodiments.
FIG. 9 is a schematic exploded view of a battery cell in some embodiments.
FIG. 10 is a schematic structural diagram of a battery cell in some other embodiments.
FIG. 11 is a schematic structural diagram of a battery cell viewed along a direction Y' opposite to a second direction Y in some other embodiments.
FIG. 12 is a schematic structural diagram of an electrode assembly in some embodiments.
FIG. 13 is a schematic structural diagram of a battery cell and a bracket in some embodiments.
FIG. 14 is a schematic structural diagram of a battery cell and a bracket from another perspective in some embodiments.
FIG. 15 is a schematic structural diagram of a battery cell and a bracket in some other embodiments.
FIG. 16 is a schematic structural diagram of a battery cell and a bracket viewed along a direction Y' opposite to a second direction Y in some embodiments.
FIG. 17 is a partial schematic structural diagram of the battery cell and the bracket in FIG. 14.
FIG. 18 is another partial schematic structural diagram of the battery cell and the bracket in FIG. 14.
FIG. 19 is a schematic structural diagram of an elastic member in some embodiments.
FIG. 20 is a partial schematic structural diagram of a housing in some embodiments.
FIG. 21 is a schematic structural diagram of an electric device in some embodiments.

Reference signs of main components:

| | |
|---|---|
| Battery module | 100 |
| Cell unit | 10 |
| Battery cell | 11 |
| Cell housing | 11a |
| Body portion | 111 |
| First wall | 111a |
| Second wall | 111b |
| Third wall | 111c |
| Fourth wall | 111d |
| Fifth wall | 111e |
| Sixth wall | 111f |
| First housing | 1111 |
| First concave portion | 1111a |
| Second housing | 1112 |
| Second concave portion | 1112a |
| First extension edge | 1113 |
| Second extension edge | 1114 |
| First sealing portion | 112 |
| First connecting portion | 112a |
| First bent portion | 112b |
| Second bent portion | 112c |
| Second sealing portion | 113 |
| Electrode assembly | 11b |
| First straight section | 1116 |
| Second straight section | 1117 |
| First curved section | 1118 |
| Second curved section | 1119 |
| Electrode terminal | 11c |
| Bracket | 12 |
| First portion | 121 |
| First side portion | 122 |
| First gap | 122a |
| Second side portion | 123 |
| Second gap | 123a |
| Second connecting portion | 124 |
| First extension portion | 125 |
| Second extension portion | 126 |
| Second portion | 127 |
| First side surface | 127a |
| Second side surface | 127b |
| Step portion | 127c |
| Flat portion | 127d |
| First step surface | 1271 |
| Second step surface | 1272 |
| First limiting portion | 1272a |
| First slope | 1273 |
| Second slope | 1274 |
| First plane | 1275 |
| Second limiting portion | 1276 |
| Third connecting portion | 128 |
| First convex portion | 110 |
| Third concave portion | 120 |
| Second convex portion | 130 |
| Fourth concave portion | 140 |
| Acquisition assembly | 20 |
| Lead | 21 |
| Sampling part | 22 |
| Opening | 22a |
| First component | 221 |
| First segment | 221a |
| Second component | 222 |
| Second segment | 222a |
| Third segment | 221b |
| Fourth segment | 222b |
| First curved portion | 2211 |
| Second curved portion | 2221 |
| Third component | 223 |
| Circuit board | 30 |
| Housing | 40 |
| Rear wall | 41 |
| Front wall | 42 |
| First side wall | 43 |
| First fixing portion | 431 |
| Second side wall | 44 |
| Second fixing portion | 441 |
| Top wall | 45 |
| Fifth limiting portion | 451 |
| Sixth limiting portion | 452 |
| Bottom wall | 46 |
| Third fixing portion | 46a |
| Third limiting portion | 461 |
| Fourth limiting portion | 462 |
| Elastic member | 50 |
| Base portion | 51 |
| Third bent portion | 52 |
| First bent section | 521 |
| Second bent section | 522 |
| Fourth bent portion | 53 |
| Third bent section | 531 |
| Fourth bent section | 532 |
| Buffer member | 60 |
| Electric device | 200 |
| First direction | X |
| Second direction | Y |
| Third direction | Z |

This application will be further described with reference to the accompanying drawings in the following specific some embodiments.

### DETAILED DESCRIPTION OF EMBODIMENTS

The following specific some embodiments are exemplary and not limiting, which are intended to provide a basic understanding of this application and are not intended to define key or decisive elements of this application or limit the scope to be protected. As long as there is no structural conflict, the various technical features mentioned in some embodiments can be combined in any manner.

When one component is assumed as being "disposed on/in" another component, the component may be provided directly on/in the another component or with a component possibly present therebetween. When one component is assumed as being "connected to" another component, it may be connected to the another component directly or with a component possibly present therebetween.

It can be understood that the terms "vertical, equal to" are used to describe the ideal state between two components. In actual production or use, there may be a state that is approximately vertical or equal between two components. For example, combined with numerical descriptions, "vertical" may mean that a range of an included angle between two lines is 90°±10°; "vertical" may also mean that a range of a dihedral angle between two planes is 90°±10°; and "vertical" may also mean that a range of an included angle between a line and a plane is 90°±10°. The two components described as "vertical" to each other may not be absolute straight lines or planes; they can roughly resemble lines or planes. From a macro perspective, a component can be considered as a "straight line" or "plane" if an overall extension direction thereof is a straight line or plane.

The term "parallel" is used to describe an ideal state between two components. In actual production or use, there may be an approximately parallel state between two components. For example, combined with numerical descriptions, "parallel" may mean that a range of an included angle between two lines is 180°±10°; "parallel" may also mean that a range of a dihedral angle between two planes is 180°±10°; and "parallel" may also mean that a range of an included angle between a line and a plane is 180°±10°. The two components described as "parallel" to each other may not be absolute straight lines or planes; they can roughly resemble lines or planes. From a macro perspective, a component can be considered as a "straight line" or "plane" if an overall extension direction thereof is a straight line or plane.

Unless otherwise defined, the term "plurality" when used to describe the number of components, specifically means that the components are two or more.

"In the first direction X" means in the first direction X and the direction opposite to the first direction X; "in the second direction Y" means in the second direction Y and the direction opposite to the second direction Y; and "in the third direction Z" means in the third direction Z and the direction opposite to the third direction Z.

For convenience of description, the electrode terminal 11c in some accompanying drawings is not bent.

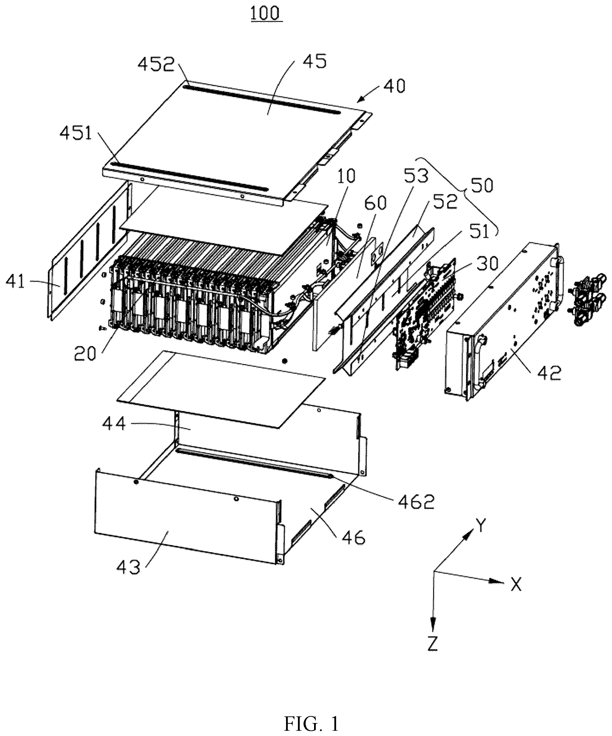

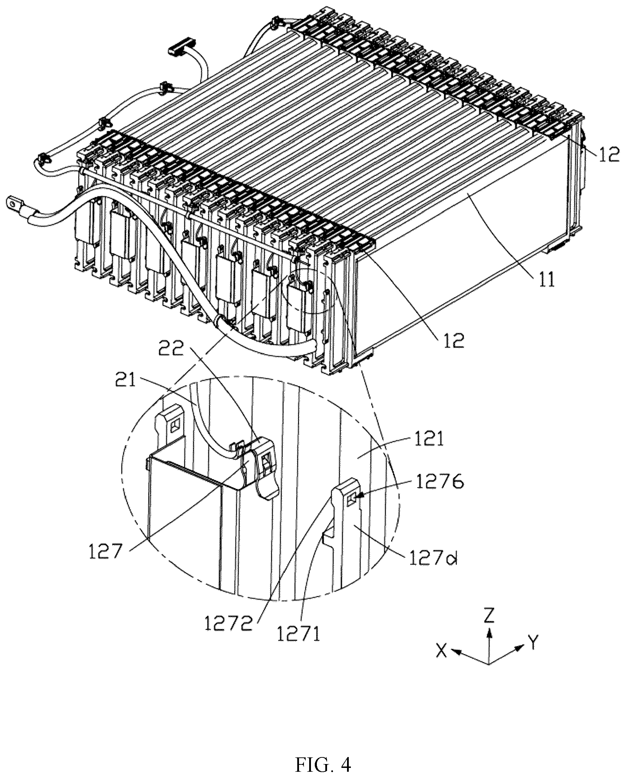

Refer to FIGs. 1 to 5 and FIG. 14. An embodiment of this application provides a battery module 100, including a plurality of cell units 10 and an acquisition assembly 20, where the plurality of cell units 10 are arranged along a first direction X, and each of the cell units 10 includes a battery cell 11 and a bracket 12, the bracket 12 being connected to the battery cell 11. The battery cell 11 includes a cell housing 11a, an electrode assembly 11b, and an electrode terminal 11c, the electrode terminal 11c being connected to the electrode assembly 11b and extends out of the cell housing 11a.

The cell housing 11a includes a body portion 111 and a first sealing portion 112, and the electrode assembly 11b is disposed in the body portion 111. The first sealing portion 112 includes a first connecting portion 112a, and the electrode terminal 11c extends out of the cell housing 11a from the first connecting portion 112a. The electrode terminals 11c of two adjacent battery cells 11 are stacked and connected to each other. The bracket 12 includes a first portion 121, the first portion 121 covering a part of the first connecting portion 112a, and the electrode terminal 11c extending out of the first portion.

The acquisition assembly 20 includes a lead 21 and a plurality of sampling parts 22, where the lead 21 is connected to each of the sampling parts 22 and the sampling part 22 is connected to any one of the interconnected electrode terminals 11c.

In this application, sampling is performed through connection between a sampling part 22 and an electrode terminal 11c. This can reduce process steps, save materials, and enhance the toughness of the first connecting portion 112a through covering the first connecting portion 112a with the first portion 121, facilitating a better connection of the sampling part 22 to the electrode terminal 11c.

In an embodiment, the electrode terminals 11c of two adjacent battery cells 11 are stacked and connected along the first direction X.

In an embodiment, the electrode terminals 11c of two adjacent battery cells 11 are stacked and connected along the second direction Y.

In an embodiment, the electrode terminals 11c of N battery cells 11 are stacked and connected along the first direction X, where N ≥ 3.

In an embodiment, the electrode terminals 11c of N battery cells 11 are stacked and connected along the second direction Y, where N ≥ 3.

In an embodiment, the sampling part 22 is fixed to the first portion 121 and connected to the electrode terminal 11c. Optionally, the first portion 121 is provided with a concave portion (not shown in the figures), and the sampling part 22 is connected to the concave portion.

In an embodiment, along the second direction Y, projections of the electrode terminals 11c of two adjacent battery cells 11 overlap. The electrode terminals 11c of two adjacent battery cells 11 are connected by welding after bent, for example, laser welding.

In an embodiment, the bracket 12 is integrally formed with the battery cell 11, which can improve the strength of connection between the bracket 12 and the battery cell 11. Optionally, the bracket 12 is integrally formed with the battery cell 11 through low-pressure injection molding.

In an embodiment, an outer surface of the body portion 111 may include some insulating members to better protect the body portion, for example, an insulating film.

In an embodiment, the bracket 12 is an insulating bracket, which can reduce the risk of short circuit between the bracket 12 and the battery cell 11.

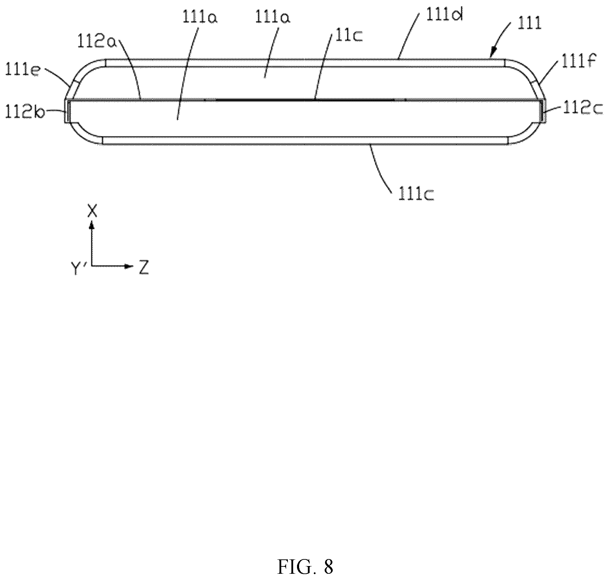

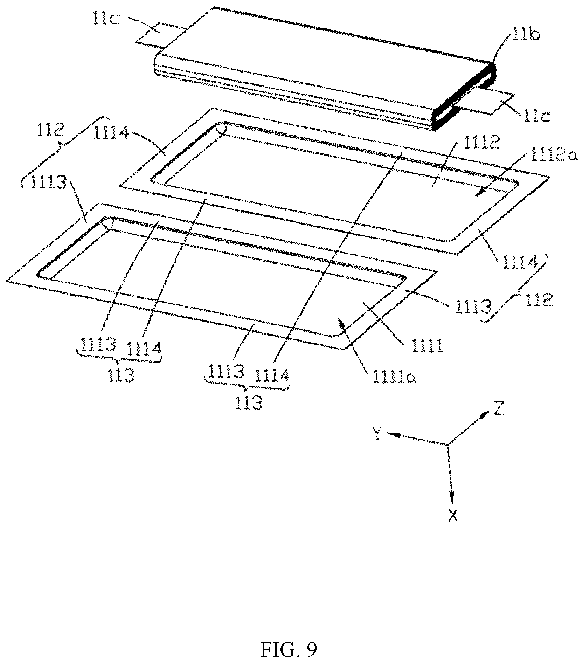

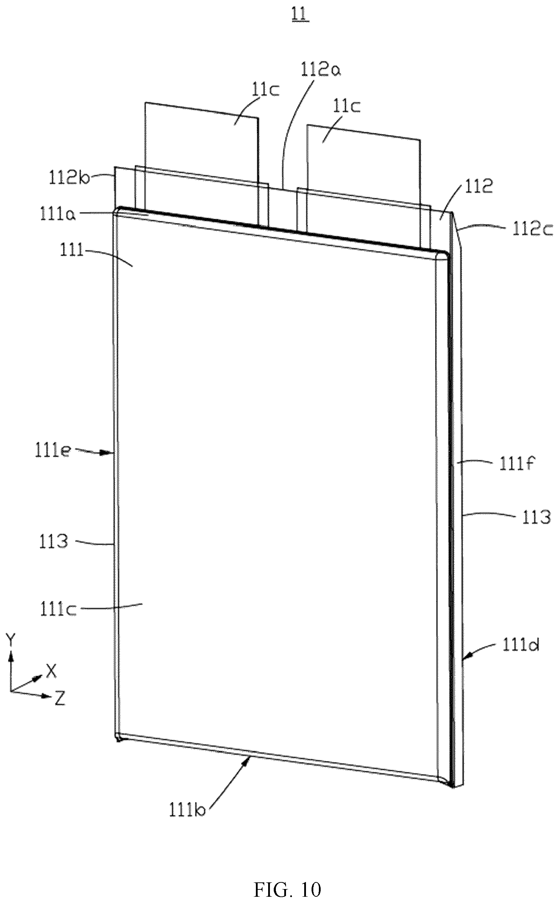

Refer to FIGs. 8 to 10. In an embodiment, the body portion 111 is provided with an accommodating space. The body portion 111 includes a first housing 1111 and a second housing 1112. The first housing 1111 is provided with a first concave portion 1111a, and the second housing 1112 is provided with a second concave portion 1112a. The first housing 1111 is connected to the second housing 1112 to form an accommodating space. A part of the electrode assembly 11b is disposed in the first concave portion 1111a and a part of the electrode assembly 11b is disposed in the second concave portion 1112a. A circumferential side of the first housing 1111 extends outward to form a first extension edge 1113, and a circumferential side of the second housing 1112 extends outward to form a second extension edge 1114. After the first housing 1111 is connected to the second housing 1112, the first extension edge 1113 and the second extension edge 1114 coincide and are hermetically connected.

In an embodiment, the first extension edge 1113 and the second extension edge 1114 coincide and are hermetically connected to form two first sealing portions 112 and two second sealing portions 113. The two first sealing portions 112 are arranged along the second direction Y and the two second sealing portions 113 are arranged along the third direction Z, where one first sealing portion 112 is connected to the two second sealing portions 113 and the other first sealing portion 112 is connected to the two second sealing portions 113.

In an embodiment, the body portion 111 includes a first wall 111a, a second wall 111b, a third wall 111c, and a fourth wall llld. The second wall 111b and the first wall 111a are disposed opposite to each other along the second direction Y. The third wall 111c and the fourth wall 111d are disposed opposite to each other along the first direction X. One of the first sealing portions 112 is connected to the first wall 111a, and the other first sealing portion 112 is connected to the second wall 111b.

The body portion 111 includes a fifth wall 111e and a sixth wall 111f, where the fifth wall 111e and the sixth wall 111f are disposed opposite to each other along the third direction Z. One of the two second sealing portions 113 is connected to the fifth wall 111e, and the other of the two second sealing portions 113 is connected to the sixth wall 111f.

In an embodiment, the battery cell 11 includes two electrode terminals 11c, where one of the electrode terminals 11c extends out of the cell housing 11a from one of the first sealing portions 112, and the other electrode terminal 11c extends out of the cell housing 11a from the other first sealing portion 112.

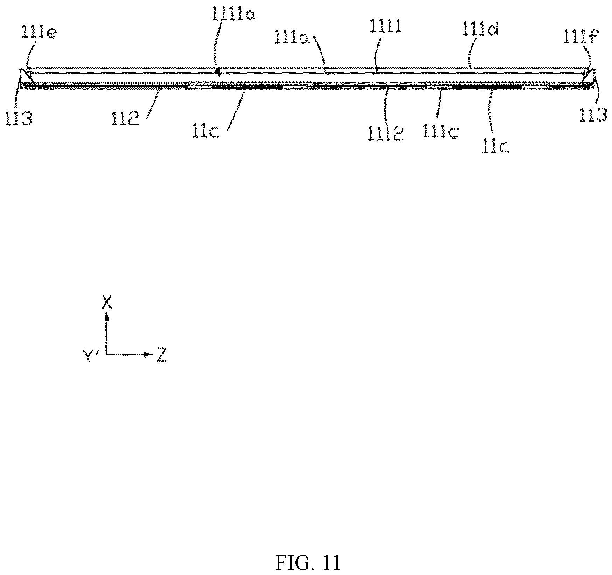

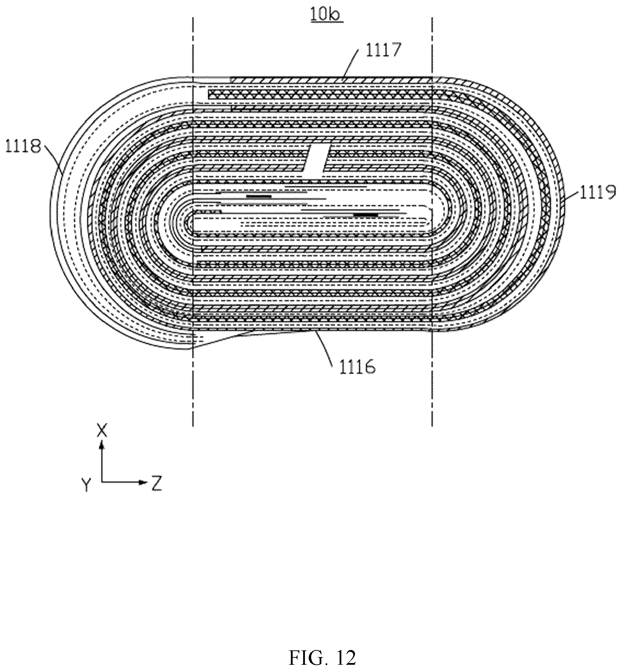

Refer to FIGs. 11 and 12. In an embodiment, the battery cell 11 includes two electrode terminals 11c and one first sealing portion 112, where the two electrode terminals 11c extend out of the cell housing 11a from the first sealing portion 112.

In an embodiment, the battery cell 11 includes two electrode terminals 11c and two first sealing portions 112, where the two electrode terminals 11c extend out of the cell housing 11a from a same first sealing portion 112.

Refer to FIGs. 8 to 10. In an embodiment, the body portion 111 includes two first walls 111a, two second walls 111b, and two first sealing portions 112. One of the first walls 111a is connected to the third wall 111c and the first sealing portion 112, and the other first wall 111a is connected to the fourth wall 111d and the first sealing portion 112. One of the second walls 111b is connected to the third wall 111c and the other first sealing portion 112, and the other second wall 111b is connected to the fourth wall 111d and the other first sealing portion 112. One of the electrode terminals 11c extends out of the cell housing 11a from one of the first sealing portions 112, and the other electrode terminal 11c extends out of the cell housing 11a from the other first sealing portion 112.

When viewed along a direction Y' opposite to the second direction Y, the two first walls 111a are located on two opposite sides of the first sealing portion 112 in the first direction X. When viewed along the second direction Y, the two second walls 111b are located on two opposite sides of the other first sealing portion 112 in the first direction X.

In an embodiment, the body portion 111 includes one first wall 111a, one second wall 111b, and two first sealing portions 112. The first wall 111a is connected to the third wall 111c and the first sealing portion 112, and the second wall 111b is connected to the third wall 111c and the other first sealing portion 112. The body portion 111 is provided with an accommodating space. The body portion 111 includes a first housing 1111 and a second housing 1112. The first housing 1111 is provided with a first concave portion 1111a, and the second housing 1112 is flat. The first housing 1111 is connected to the second housing 1112 to form an accommodating space. The electrode assembly 11b is disposed in the first concave portion 1111a. One of the electrode terminals 11c extends out of the cell housing 11a from one of the first sealing portions 112, and the other electrode terminal 11c extends out of the cell housing 11a from the other first sealing portion 112.

In an embodiment, the body portion 111 includes two first walls 111a, a second wall 111b, and a first sealing portion 112. The body portion 111 is provided with an accommodating space. The body portion 111 includes a first housing 1111 and a second housing 1112, where the first housing 1111 is connected to the second housing 1112. The first housing 1111 is provided with a first concave portion 1111a and the second housing 1112 is provided with a second concave portion 1112a to form an accommodating space. The electrode assembly 11b is disposed in the first concave portion 1111a and the second concave portion 1112a. The two electrode terminals 11c extend out of the cell housing 11a from a same first sealing portion 112.

Optionally, the second wall 111b is provided in one and the first sealing portion 112 is provided in one, where one of the first walls 111a is connected to the third wall 111c and the first sealing portion 112, and the other first wall 111a is connected to the fourth wall 111d and the first sealing portion 112. When viewed along a direction Y' opposite to the second direction Y, the two first walls 111a are located on two opposite sides of the first sealing portion 112 in the first direction X.

Optionally, the second wall 111b is provided in two and the first sealing portion 112 is provided in two, where one of the first walls 111a is connected to the third wall 111c and the first sealing portion 112, and the other first wall 111a is connected to the fourth wall 111d and the first sealing portion 112. When viewed along the direction Y' opposite to the second direction Y, the two first walls 111a are located at two opposite sides of the first sealing portion 112 in the first direction X. One of the second walls 111b is connected to the third wall 111c and the other first sealing portion 112, and the other second wall 111b is connected to the fourth wall 111d and the other first sealing portion 112. When viewed along the second direction Y, the two second walls 111b are located on two opposite sides of the first sealing portion 112 in the first direction X.

Refer to FIG. 12. In an embodiment, the body portion 111 includes one first wall 111a, one second wall 111b, and a first sealing portion 112. The body portion 111 is provided with an accommodating space. The body portion 111 includes a first housing 1111 and a second housing 1112. The first housing 1111 is provided with a first concave portion 1111a, and the second housing 1112 is flat. The first housing 1111 is connected to the second housing 1112 to form an accommodating space. The electrode assembly 11b is disposed in the first concave portion 1111a. The two electrode terminals 11c extend out of the cell housing 11a from a same first sealing portion 112.

Optionally, the first sealing portion 112 is provided in one, the first wall 111a is connected to the third wall 111c and the first sealing portion 112, and the second wall 111b is connected to the third wall 111c.

Optionally, the first sealing portion 112 is provided in two. The first wall 111a is connected to the third wall 111c and the first sealing portion 112, the second wall 111b is connected to the third wall 111c and the other first sealing portion 112.

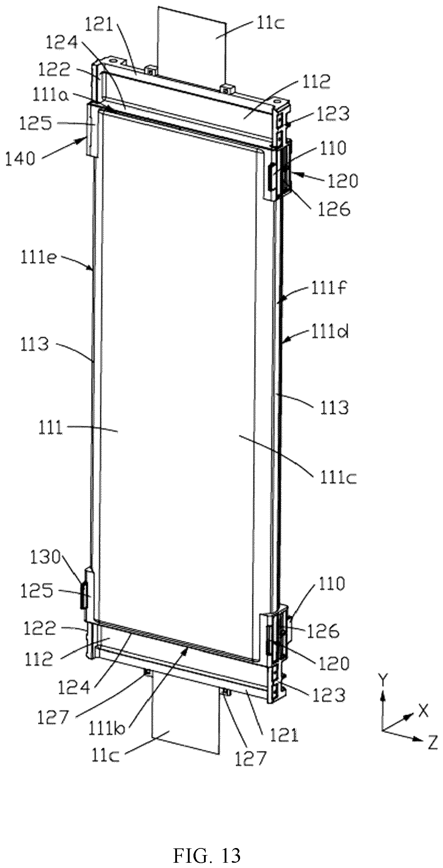

Refer to FIGs. 8 and 13. In an embodiment, the electrode assembly 11b has a wound structure, and the electrode assembly 11b includes a first straight section 1116, a second straight section 1117, a first curved section 1118, and a second curved section 1119. The first straight section 1116 is connected to the first curved section 1118 and the second curved section 1119, and the second straight section 1117 is connected to the first curved section 1118 and the second curved section 1119. Along the first direction X, a projection of the third wall 111c covers a projection of the first straight section 1116; a projection of the fourth wall 111d covers the projection of the first straight section 1116; the projection of the third wall 111c covers a projection of the second straight section 1117; and the projection of the fourth wall 111d covers the projection of the second straight section 1117. This is conducive to even application of pressures among the battery cells 11, further improving the service life of the battery cells 11.

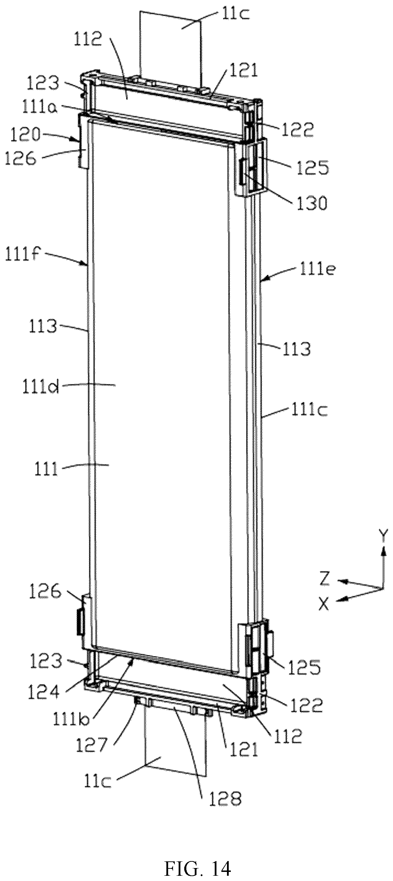

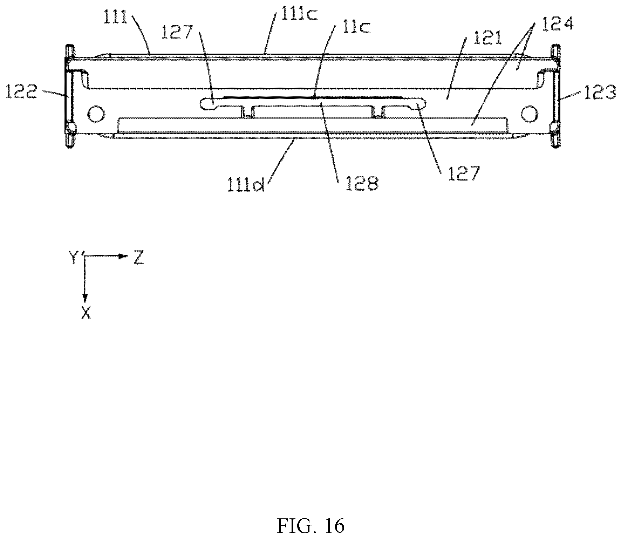

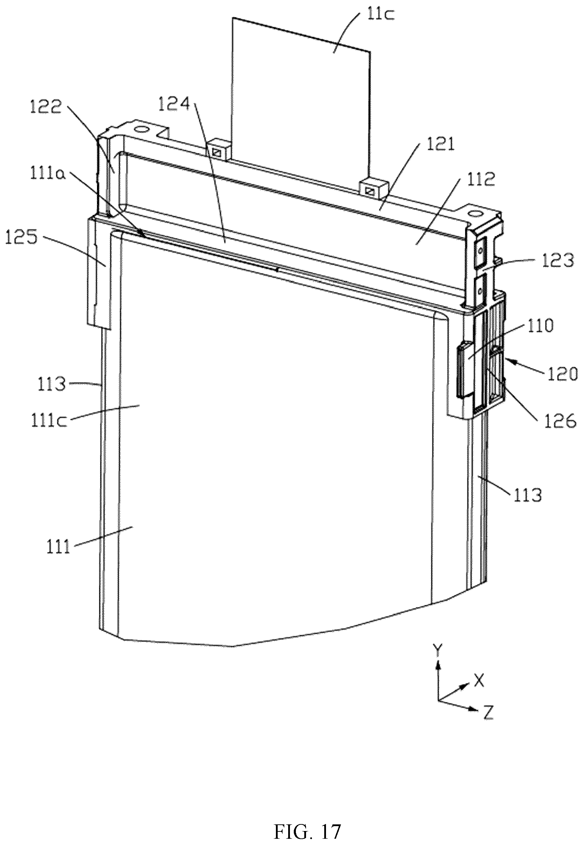

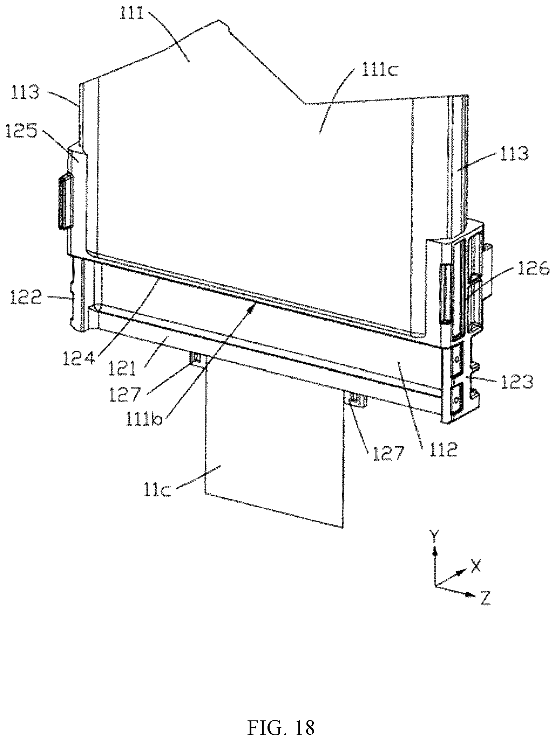

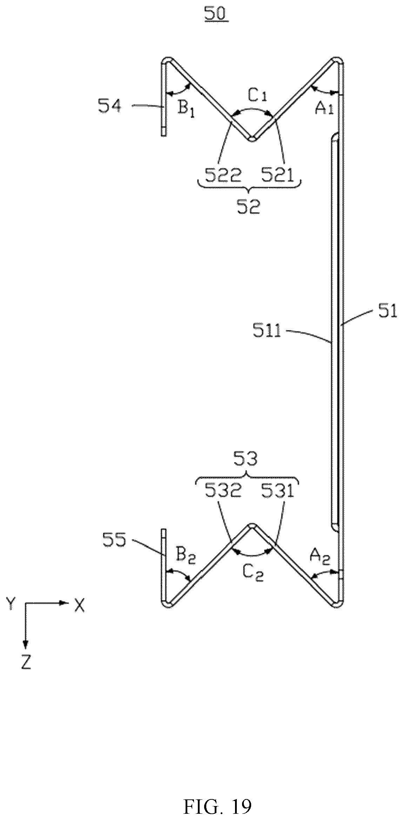

Refer to FIGs. 14 to 19. In an embodiment, when viewed along the direction Y' opposite to the second direction Y, the first portion 121 is located between the third wall 111c and the fourth wall 111d in the first direction X. When the body portions 111 of adjacent battery cells 11 apply pressure to each other, the force applied on the first sealing portion 112 can be reduced, improving protection for the first sealing portion 112.

In an embodiment, the first sealing portion 112 includes a first bent portion 112b and a second bent portion 112c, where the first bent portion 112b and the second bent portion 112c are disposed opposite to each other along the third direction Z. The first bent portion 112b is connected to the second bent portion 112c by the first connecting portion 112a.

In an embodiment, the bracket 12 includes a first side portion 122 and a second side portion 123. One end of the first portion 121 is connected to the first side portion 122 and another end of the first portion 121 is connected to the second side portion 123, which can increase the structural strength of the bracket 12. The first side portion 122 covers the first bent portion 112b, and the second side portion 123 covers the second bent portion 112c, implementing protection for the first sealing portion 112.

In an embodiment, when viewed along the direction Y' opposite to the second direction Y, the first side portion 122 is located between the third wall 111c and the fourth wall 111d in the first direction X. When the body portions 111 of adjacent battery cells 11 apply pressure to each other, the force applied on the first sealing portion 112 can be reduced, improving protection for the first sealing portion 112.

In an embodiment, when viewed along the direction Y' opposite to the second direction Y, the second side portion 123 is located between the third wall 111c and the fourth wall 111d in the first direction X. When the body portions 111 of adjacent battery cells 11 apply pressure to each other, the force applied on the first sealing portion 112 can be reduced, improving protection for the first sealing portion 112.

In an embodiment, along the second direction Y, a projection of the first side portion 122 overlaps a projection of the first curved section 1118; the projection of the first side portion 122 is spaced apartfrom a projection of the first straight section 1116; and the projection of the first side portion 122 is spaced apartfrom a projection of the second straight section 1117. This is conducive to pressure relief.

In an embodiment, along the second direction Y, a projection of the second side portion 123 overlaps a projection of the second curved section 1119; the projection of the second side portion 123 is spaced apart from a projection of the first straight section 1116; and the projection of the second side portion 123 is spaced apart from a projection of the second straight section 1117. This is conducive to pressure relief.

In an embodiment, the bracket 12 includes a second connecting portion 124, where the second connecting portion 124 covers at least a part of the first wall 111a. One end of the second connecting portion 124 is connected to the first side portion 122 and another end of the second connecting portion 124 is connected to the second side portion 123, which can further increase the structural strength of the bracket 12. When viewed along the direction Y' opposite to the second direction Y, the second connecting portion 124 does not extend beyond the third wall 111c in the first direction X, and the second connecting portion 124 does not extend beyond the fourth wall 111d in the first direction X. The body portions 111 of adjacent battery cells 11 are in contact connection with each other. Adjacent battery cells 11 apply pressure to each other through the body portions 111. This can reduce the force applied on the first sealing portion 112, improving protection for the first sealing portion 112. Moreover, the number of buffer members between adjacent battery cells 11 that provide swelling space for the battery cells 11 can be reduced, decreasing the space occupied, and thereby improving the energy density of the battery module 100.

In an embodiment, the bracket 12 includes a first extension portion 125, where the first extension portion 125 extends from the first side portion 122. The first extension portion 125 can protect the fifth wall 111e and the second sealing portion 113, increasing the strength of connection between the bracket 12 and the battery cell 11.

Optionally, in the second direction Y, a part of the fifth wall 111e and a part of the second sealing portion 113 are provided with a first extension portion 125, which can protect a part of the body portion 111 and a part of the second sealing portion 113, increase the strength of connection between the bracket 12 and the battery cell 11, and facilitate the integral forming of the bracket 12 with the battery cell 11.

Optionally, in the second direction Y, the entire fifth wall 111e and the entire second sealing portion 113 are provided with the first extension portion 125, which can better protect the body portion 111 and the second sealing portion 113, and better increase the strength of connection between the bracket 12 and the battery cell 11.

When viewed along the direction Y' opposite to the second direction Y, the first side portion 122 does not extend beyond the first extension portion 125 in the first direction X, and a first gap 122a is formed between adjacent first side portions 122. When adjacent body portions 111 are in contact connection and apply pressure to each other, the force applied on the first side portion 122 can be reduced, thereby further decreasing the force applied to the first sealing portion 112, which is beneficial for protecting the first sealing portion 112. The first gap 122a also facilitates the heat dissipation of the battery cell 11.

In an embodiment, the bracket 12 includes a second extension portion 126, where the second extension portion 126 extends from the second side portion 123. The second extension portion 126 can protect the sixth wall 111f and the other second sealing portion 113, which can increase the strength of connection between the bracket 12 and the battery cell 11 and facilitate the integral forming of the bracket 12 with the battery cell 11.

Optionally, in the second direction Y, a part of the sixth wall 111f and a part of the other second sealing portion 113 are provided with a second extension portion 126, which can protect a part of the body portion 111 and a part of the second sealing portion 113, increase the strength of connection between the bracket 12 and the battery cell 11, and facilitate the integral forming of the bracket 12 with the battery cell 11.

Optionally, in the second direction Y, the entire sixth wall 111f and the entire the other second sealing portion 113 are provided with the second extension portion 126, which can better protect the body portion 111 and the second sealing portion 113, and better increase the strength of connection between the bracket 12 and the battery cell 11.

In an embodiment, when viewed along the direction Y' opposite to the second direction Y, the second side portion 123 does not extend beyond the second extension portion 126 in the first direction X, and a second gap 123a is formed between adjacent second side portions 123. When adjacent body portions 111 are in contact connection and apply pressure to each other, the second gap 123a can reduce the force applied on the second side portion 123, thereby further decreasing the force applied to the first sealing portion 112, which is beneficial for protecting the first sealing portion 112. The second gap 123a also facilitates the heat dissipation of the battery cell 11.

In an embodiment, when viewed along the first direction X, in the second direction Y, a part of the first connecting portion 112a is located between the body portion 111 and the first portion 121; and in the third direction Z, a part of the first connecting portion 112a is located between the first side portion 122 and the second side portion 123. Through the covering of a part of the first connecting portion 112a with the bracket 12, additional protection for the first sealing portion 112 is provided. Through the provision of a part of the first connecting portion 112a between the body portion 111 and the first portion 121 as well as between the first side portion 122 and the second side portion 123, a space for swelling is provided for the first sealing portion 112, facilitating pressure relief and reducing the impact of pressure within the battery cell 11 on the first connecting portion 112a. This, in turn, reduces the impact on the sealing performance of the first sealing portion 112 and is conducive to heat dissipation of the first sealing portion 112.

In an embodiment, the battery cell 11 includes an electrolyte, and the electrolyte is disposed in the cell housing 11a. The electrode assembly 11b includes a first electrode plate, a separator, and a second electrode plate, and is formed by winding or stacking the first electrode plate, the separator, and the second electrode plate. Some of the electrolyte infiltrates the first electrode plate, the separator, and the second electrode plate for conducting electric ions; and some of the electrolyte adheres to a surface of the cell housing 11a and/or a surface of the electrode assembly 11b in a free state. The electrolyte in a free state is referred to as free electrolyte. During the cycling process of the plurality of battery cells 11, the free electrolyte inside the battery cell 11 will be squeezed.

In this application, in the second direction Y, a part of the first connecting portion 112a is located between the body portion 111 and the first portion 121; and in the third direction Z, a part of the first connecting portion 112a is located between the first side portion 122 and the second side portion 123 to provide a space for swelling of the first sealing portion 112, thus reducing the impact of the swelling of the battery cell 11 on the sealing performance of the first sealing portion 112.

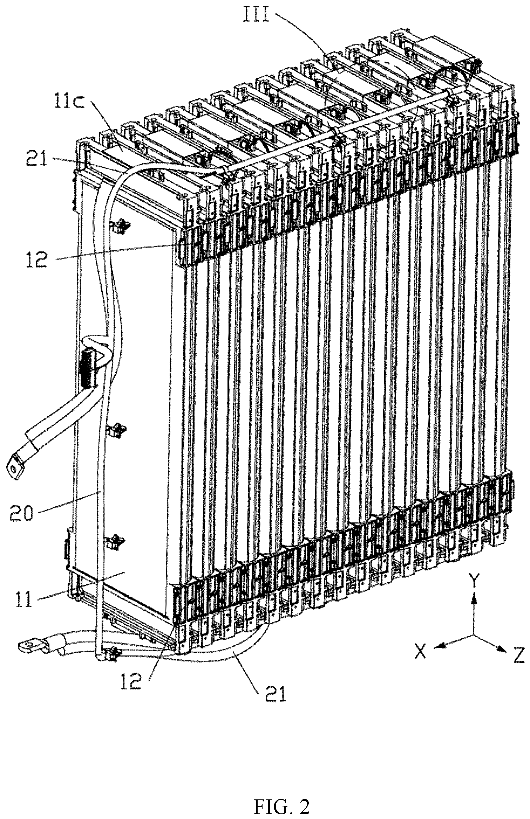

Refer to FIGs. 2 to 5, in an embodiment, the bracket 12 of at least one of the plurality of cell units 10 include a second portion 127, and a part of the electrode terminal 11c and the second portion 127 are arranged along the first direction X. Along the first direction X, a projection of the second portion 127 overlaps a projection of the electrode terminal 11c. The sampling part 22 is connected to the second portion 127 and the electrode terminal 11c.

In another embodiment, the second portion 127 and the electrode terminal 11c are arranged along the first direction X.

In an embodiment, the second portion 127 is connected to the first portion 121, and the first portion 121 and the second portion 127 are arranged along the second direction Y. When viewed along the direction Y' opposite to the second direction Y, the second portion 127 does not extend beyond the first portion 121 in the first direction X; and in the third direction Z, the second portion 127 does not extend beyond the first portion 121. Along the first direction X, one side of the sampling part 22 is connected to any one of the interconnected electrode terminals 11c, and another side of the sampling part 22 is connected to the second portion 127.

Optionally, the sampling part 22 is clamped between the second portion 127 and the electrode terminal 11c. Alternatively, the sampling part 22 is welded to any one of the interconnected electrode terminals 11c. Optionally, one side of the sampling part 22 is connected to the second portion 127, and another side of the sampling part 22 is welded to the electrode terminal 11c, so that the strength of connection between the electrode terminal 11c and the sampling part 22 can be improved.

In an embodiment, when viewed along the first direction X, in the third direction Z, a part of the second portion 127 extends beyond the electrode terminal 11c, which is convenient for the sampling part 22 to be connected to the second portion 127 and the electrode terminal 11c.

In an embodiment, the second portion 127 includes a first side surface 127a and a second side surface 127b, where the second side surface 127b and the first side surface 127a are disposed opposite to each other along the first direction X.

In an embodiment, in the first direction X, the interconnected electrode terminals 11c and the sampling part 22 are stacked. Optionally, the sampling part 22 is located between the electrode terminals 11c. Optionally, the sampling part 22 is located at the leftmost side of the stack. Optionally, the sampling part 22 is located at the rightmost side of the stack.

Optionally, along the first direction X, one side of the sampling part 22 is connected to the first side surface 127a, and the electrode terminal 11c is located between the second side surface 127b and the sampling part 22. The sampling part 22 is connected to the second portion 127, and any one of the interconnected electrode terminals 11c is connected to the sampling part 22. Optionally, along the first direction X, one side of the sampling part 22 is connected to the second side surface 127b, and the electrode terminal 11c is located between the first side surface 127a and the sampling part 22. In an embodiment, at least one of the first side surface 127a and the second side surface 127b is provided with a step portion 127c, and the sampling part 22 is connected to the step portion 127c. This can improve the strength of connection between the sampling part 22 and the second portion 127 and reduce the risk of the sampling part 22 detaching from the second portion 127.

Optionally, the first side surface 127a is provided with a step portion 127c, and the second side surface 127b is provided with a step portion 127c. This can further improve the strength of connection between the sampling part 22 and the second portion 127 and further reduce the risk of the sampling part 22 detaching from the second portion 127.

Optionally, the first side surface 127a is provided with a step portion 127c, and the second side surface 127b is provided with a flat portion 127d. One side of the sampling part 22 is connected to the step portion 127c. This can improve the strength of connection between the sampling part 22 and the second portion 127 and reduce the risk of the sampling part 22 detaching from the second portion 127. The flat portion 127d is connected to any one of the interconnected electrode terminals 11c and a part of the electrode terminal 11c is disposed between the flat portion 127d and the sampling part 22. The part of the electrode terminal 11c is spread flat relative to the flat portion 127d, reducing the wrinkles of the electrode terminal 11c and contributing to the protection of the electrode terminal 11c.

In an embodiment, the step portion 127c includes a first step surface 1271 and a second step surface 1272, where the first step surface 1271 and the second step surface 1272 are arranged along the third direction Z. Along the first direction X, the first step surface 1271 has a thickness less than a thickness of the second step surface 1272 to form the step portion 127c. A part of the sampling part 22 is connected to the first step surface 1271 and a part of the sampling part 22 is connected to the second step surface 1272. Along the first direction X, a projection of the first step surface 1271 overlaps a projection of the electrode terminal 11c, and a projection of the second step surface 1272 is spaced apart from the projection of the electrode terminal 11c.

In an embodiment, the second portion 127 is provided with a first slope 1273, a second slope 1274, and a first plane 1275 on an end far away from the electrode terminal 11c, where the first slope 1273 is connected to the first plane 1275, and the first plane 1275 is connected to the second slope 1274. When viewed along the direction Y' opposite to the second direction Y, along the third direction Z, a distance between the first slope 1273 and the second slope 1274 gradually decreases along the first direction X to provide guidance to the sampling part 22, facilitating the connection of the sampling part 22 to the second portion 127.

In an embodiment, the bracket 12 includes two second portions 127, where the two second portions 127 are disposed opposite to each other along the third direction Z. This facilitates the adjustment of the positions of the lead 21 and the sampling part 22 and is beneficial to the spatial layout.

In an embodiment, the bracket 12 includes a third connecting portion 128, where the third connecting portion 128 is connected to the second portion 127 and the third connecting portion 128 is connected to the first portion 121. Along the first direction X, the third connecting portion 128 is located between adjacent electrode terminals 11c, and a projection of the third connecting portion 128 overlaps with the projection of the electrode terminal 11c. The third connecting portion 128 is connected to a part of the electrode terminal 11c extending out of the cell housing 11a. Along the first direction X, the third connecting portion 128 can provide support for the electrode terminal 11c extending beyond the first connecting portion 112a. This is conducive to the bending connection of the electrode terminals 11c of two adjacent battery cells 11.

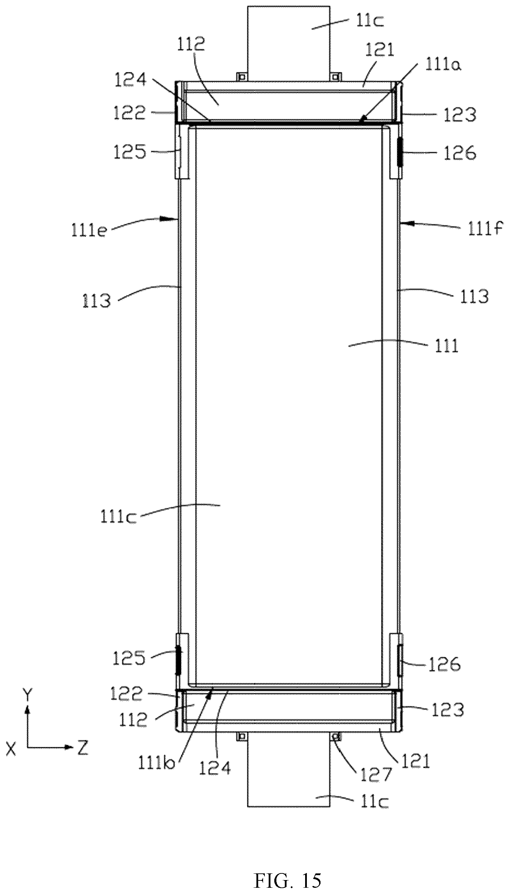

Refer to FIGs. 14 and 15. In some embodiments, along the first direction X, the bracket 12 includes a first convex portion 110 and a third concave portion 120, where the third concave portion 120 is disposed on the second extension portion 126 and the first convex portion 110 extends from the second extension portion 126. When the body portion 111 is in contact connection with the body portion 111 of an adjacent battery cell 11, the first convex portion 110 is disposed in the third concave portion 120 of the adjacent bracket 12, and there is a gap between the first convex portion 110 and the third concave portion 120. The third concave portion 120 and the first convex portion 110 are configured to position adjacent brackets 12, which reduces the offset between adjacent body portions 111, and facilitates a plurality of body portions 111 to apply pressure on each other. The gap between the first convex portion 110 and the third concave portion 120 can reduce the force applied to the bracket 12, improve the protection for the first sealing portion 112, and increase the strength of connection between the bracket 12 and the battery cell 11.

In some embodiments, along the first direction X, the bracket 12 includes a second convex portion 130 and a fourth concave portion 140, where the fourth concave portion 140 is disposed on the first extension portion 125, and the second convex portion 130 extends from the first extension portion 125. When the body portion 11 is in contact connection with the body portion 11 of an adjacent battery cell 11, the second convex portion 130 is disposed in the fourth concave portion 140 of the adjacent bracket 12, and there is a gap between the second convex portion 130 and the fourth concave portion 140. The fourth concave portion 140 and the second convex portion 130 are configured to further position adjacent brackets 12, which further reduces the offset between adjacent body portions 111, and further facilitates a plurality of body portions 111 to apply pressure on each other. The gap between the second convex portion 130 and the fourth concave portion 140 can reduce the force applied to the bracket 12, further improve the protection for the first sealing portion 112, and further increase the strength of connection between the bracket 12 and the battery cell 11.

In an embodiment, the cell unit 10 includes two brackets 12, one of the brackets 12 is connected to a part of the first sealing portion 112, and the other bracket 12 is connected to a part of the other first sealing portion 112. One electrode terminal 11c extends out of the first sealing portion 112 and bracket 12 along the second direction Y, and another electrode terminal 11c extends out of the other first sealing portion 112 and bracket 12 along the direction opposite to the second direction Y.

In an embodiment, the two brackets 12 included in the cell unit 10 have the same structure.

In an embodiment, the battery module 100 includes two acquisition assemblies 20, each acquisition assembly 20 includes a lead 21 and a sampling part 22, and the body portion 111 includes two first sealing portions 112. The two first sealing portions 112 are arranged along the second direction Y. The battery cell 11 includes two electrode terminals 11c. One of the sampling parts 22 is connected to the electrode terminals 11c, of two adjacent battery cells 11, which are stacked and connected, where the electrode terminals 11c extend out of the first sealing portion 112 along the second direction Y. The other sampling part 22 is connected to the electrode terminals 11c, of two adjacent battery cells 11, which are stacked and connected, where the electrode terminals 11c extend out of the other first sealing portion 112 along a direction opposite to the second direction Y.

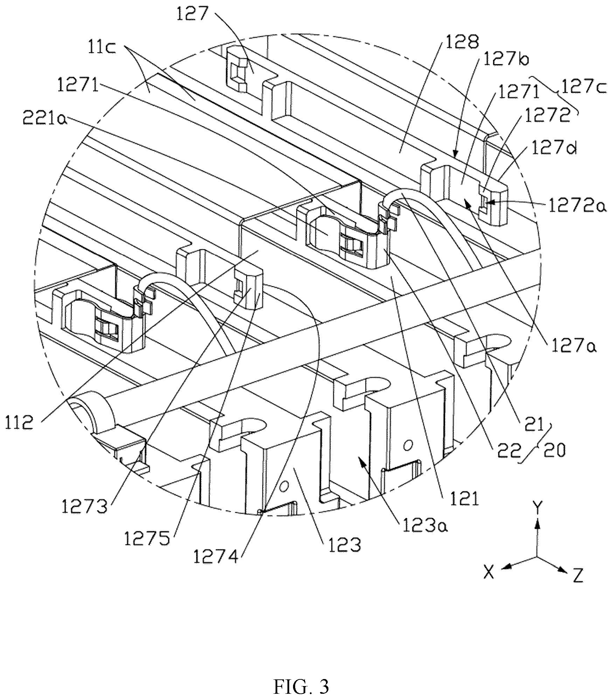

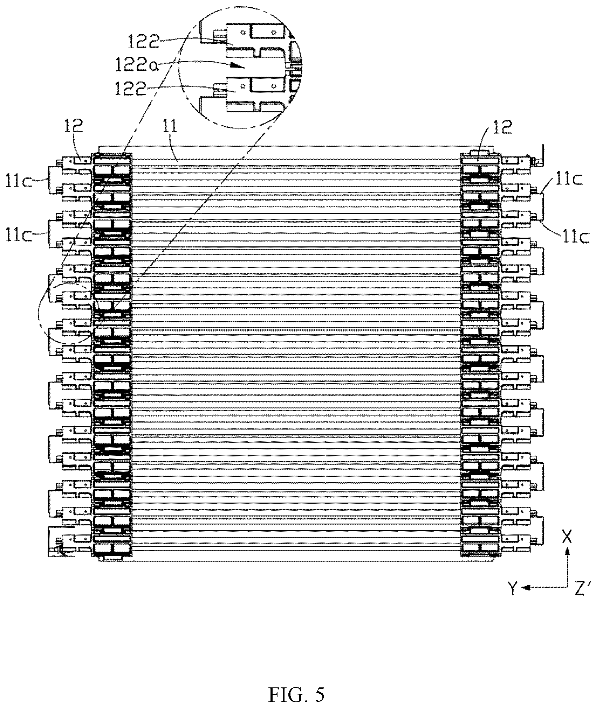

Refer to FIGs. 3 and 5. In an embodiment, the sampling part 22 includes a first component 221 and a second component 222. The first component 221 and the second component 222 are connected at one end, and are separated at another end to form an opening 22a. The first component 221 includes a first segment 221a, and the second component 222 includes a second segment 222a. The first segment 221a is connected to the first side surface 127a, and the second segment 222a is connected to the second side surface 127b. Optionally, the first segment 221a is connected to the first step surface 1271, and the second segment 222a is connected to the flat portion 127d.

In an embodiment, the first segment 221a is bent toward the second segment 222a, and the first segment 221a is connected to the first step surface 1271, so that the first step surface 1271 can restrict the first segment 221a, enhancing the strength of connection between the first segment 221a and the step portion 127c. The second segment 222a is flat. The first segment 221a and the second segment 222a form an opening 22a. The second segment 222a is connected to the flat portion 127d, increasing the area of contact between the second segment 222a and the electrode terminal 11c, conducive to improving the strength of connection between the second segment 222a and the electrode terminal 11c.

In an embodiment, the first segment 221a is bent toward the second segment 222a, and the first segment 221a is connected to the first step surface 1271, so that the first step surface 1271 can restrict the first segment 221a, enhancing the strength of connection between the first segment 221a and the step portion 127c. The first segment 221a and the second segment 222a form an opening 22a, and the second segment 222a is connected to the flat portion 127d. The second segment 222a is bent toward the first segment 221a, enhancing the clamping force between the first segment 221a and the second segment 222a. This is conducive to improving the strength of connection between the sampling part 22 and the second portion 127, consequently enhancing the strength of connection between the sampling part 22 and the electrode terminal 11c. A free end of the first segment 221a and a free end of the second segment 222a are bent away from each other, increasing the opening 22a, and facilitating the connection of the sampling part 22 to the second portion 127.

In an embodiment, the first component 221 includes a third segment 221b, and the third segment 221b is connected to the first segment 221a. The second step surface 1272 is provided with a first limiting portion 1272a, and the first limiting portion 1272a is formed by a surface depression on the second step surface 1272. The third segment 221b is provided with a first curved portion 2211 bent toward the first limiting portion 1272a. When the sampling part 22 is connected to the second portion 127, the first curved portion 2211 is disposed in the first limiting portion 1272a. The first curved portion 2211 is configured to restrict the sampling part 22 from detaching from the second portion 127, thereby enhancing the strength of connection between the sampling part 22 and the second portion 127.

In an embodiment, the second component 222 includes a fourth segment 222b, and the fourth segment 222b is connected to the second segment 222a. The flat portion 127d is provided with a second limiting portion 1276, and the second limiting portion 1276 is formed by a surface depression on the flat portion 127d. The fourth segment 222b is provided with a second curved portion 2221 bent toward the second limiting portion 1276. Along the third direction Z, the second limiting portion 1276 is disposed on a part of the flat portion 127d extending beyond the electrode terminal 11c. When the sampling part 22 is connected to the second portion 127, the second curved portion 2221 is disposed in the second limiting portion 1276, and the second curved portion 2221 is configured to restrict the sampling part 22 from detaching from the second portion 127. This can further improve the strength of connection between the sampling part 22 and the second portion 127.

In an embodiment, the first component 221 and the second component 222 are integrally formed, for example, integrally formed by stamping.

In an embodiment, the sampling part 22 includes a third component 223. The third component 223 is connected to the first component 221 and/or the second component 222 on the side opposite the first portion 121. The lead 21 is connected to the third component 223. The third component 223 can increase the strength of connection between the lead 21 and the sampling part 22 and facilitate the lead 21 extending from the sampling part 22.

In an embodiment, the sampling part 22 can collect electrical signal information of the battery cell 11, where the electrical signal information includes, but is not limited to, voltage, current, and temperature.

Refer to FIGs. 2 to 5. In an embodiment, when the battery cell 11 includes two electrode terminals 11c, and one of the electrode terminals 11c extends out of the cell housing 11a from the first sealing portion 112, and the other electrode terminal 11c extends out of the cell housing 11a from the other first sealing portion 112, the sampling part 22 is provided in two, with one connecting to the interconnected electrode terminals 11c of two adjacent battery cells 11 on one side, and the other sampling part 22 connecting to the interconnected electrode terminals 11c of two adjacent battery cells 11 on the other side.

Refer to FIG. 1. In an embodiment, the battery module 100 includes a circuit board 30, and the cell unit 10 and the circuit board 30 are arranged along the first direction X. The circuit board 30 is connected to the lead 21 and can receive data collected by the sampling part 22. The circuit board 30 includes a BMS component (BatteryManagementSystem), where the BMS component includes a plurality of electronic components and the electronic components can implement functions such as control, protection, communication, electric quantity calculation, signal transmission, electric energy transmission, and the like for the battery cell 11. Optionally, the circuit board 30 includes a flexible printed circuit (FPC, FlexiblePrintedCircuit). Optionally, the circuit board 30 includes a printed circuit board (PCB, PrintedCircuitBoard), where the circuit board 30 is provided with a plurality of leads (not shown in the figures).

Refer to FIG. 1. In an embodiment, the battery module 100 further includes a housing 40, where the housing 40 includes a rear wall 41, a front wall 42, a first side wall 43, a second side wall 44, a top wall 45, and a bottom wall 46. The rear wall 41 and the front wall 42 are arranged along the first direction X, the first side wall 43 and the second side wall 44 are arranged along the second direction Y, and the top wall 45 and the bottom wall 46 are arranged along the third direction Z. The rear wall 41 is connected to the first side wall 43, the second side wall 44, the top wall 45, and the bottom wall 46, forming an accommodating space. The cell unit 10 is disposed in the accommodating space.

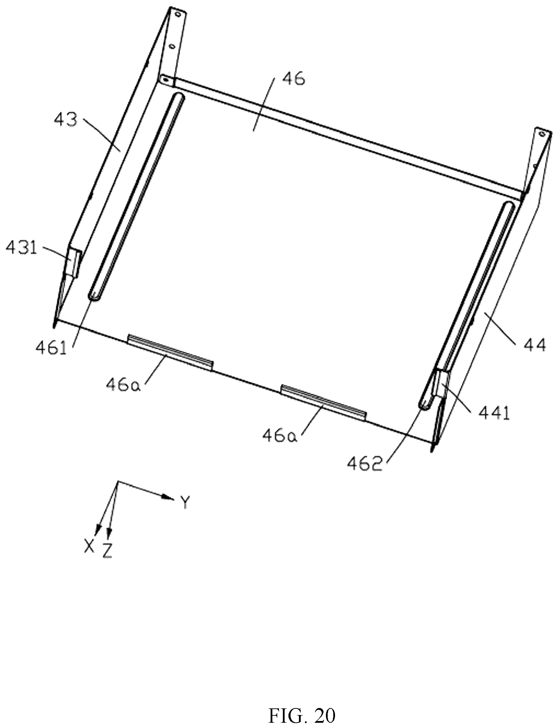

Refer to FIGs. 1, 20, and 21. In an embodiment, the battery module 100 further includes an elastic member 50, where the elastic member 50 is disposed between the cell unit 10 and the housing 40. The elastic member 50 is fixedly connected to the housing 40 and can apply pressure to and provide a swelling space for the battery cell 11. Optionally, the elastic member 50 is disposed between the cell unit 10 and the rear wall 41. Optionally, the elastic member 50 is disposed between the cell unit 10 and the front wall 42. Optionally, the battery module 100 includes two elastic members 50, where one of the elastic members 50 is disposed between the cell unit 10 and the rear wall 41, and the other elastic member 50 is disposed between the cell unit 10 and the front wall 42.

In an embodiment, the elastic member 50 includes a base portion 51, a third bent portion 52, and a fourth bent portion 53, where the third bent portion 52 and the fourth bent portion 53 are arranged along the third direction Z. The third bent portion 52 is connected to the fourth bent portion 53 by the base portion 51. The base portion 51 is configured as being able to provide pressure to the cell unit 10, and the pressure from the third bent portion 52 and the fourth bent portion 53 acts on a plurality of cell units 10 through the base portion 51. The third bent portion 52 and the fourth bent portion 53 are configured to provide swelling space for the cell unit 10. When the battery cell 11 swells, the third bent portion 52 and the fourth bent portion 53 contract.

In some embodiments, the third bent portion 52 is fixedly connected to the first side wall 43 and the second side wall 44, and the fourth bent portion 53 is fixedly connected to the bottom wall 46.

In an embodiment, the third bent portion 52 is fixedly connected to the top wall 45 and the bottom wall 46, and the fourth bent portion 53 is fixedly connected to the top wall 45 and the bottom wall 46.

In some embodiments, when the battery cell 11 has not swollen, the elastic member 50 does not apply pressure to the cell unit 10. The elastic member 50 is connected to the battery cell 11. When the battery cell 11 swells, the battery cell 11 compresses the elastic member 50, and the elastic member 50 provides pressure to the battery cell 11.

In some embodiments, when the battery cell 11 has not swollen, the elastic member 50 provides pressure to the battery cell 11. When the battery cell 11 swells, the battery cell 11 compresses the elastic member 50, and the elastic member 50 provides more pressure to the battery cell 11.

In some embodiments, the base portion 51 is connected to the body portion 111 of the outermost battery cell 11. The base portion 51 is provided with a plurality of protrusions 511 spaced apart along the first direction X. The protrusions 511 are formed by depressions, depressing in a direction away from the body portion 111, on a side of the base portion 51 facing the body portion 111. This increases the structural strength of the base portion 51 and reduces the risk of deformation of the base portion 51 due to uneven force applied on the base portion 51.

In some embodiments, the elastic member 50 includes a first connecting section 54, where the first connecting section 54 is connected to a side of the third bent portion 52 facing away from the base portion 51, and the first connecting section 54 is fixedly connected to the housing 40. The third bent portion 52 is fixedly connected to the housing 40 through the first connecting section 54 so that the force applied to the third bent portion 52 can be transferred to the housing 40. The fixation method may include, for example, welding fixation, adhesive fixation, abutting fixation, clamping fixation, screw fixation, and the like.

In some embodiments, the first connecting section 54 is parallel to the base portion 51, facilitating deformation of the elastic member 50 in the first direction X.

In some embodiments, the elastic member 50 includes a second connecting section 55, where the second connecting section 55 is connected to a side of the fourth bent portion 53 facing away from the base portion 51, and the second connecting section 55 is fixedly connected to the housing 40. The fourth bent portion 53 is fixedly connected to the housing 40 through the second connecting section 55 so that the force applied to the fourth bent portion 53 can be transferred to the housing 40. The fixation method may include, for example, welding fixation, adhesive fixation, abutting fixation, clamping fixation, screw fixation, and the like.

In some embodiments, the second connecting section 55 is parallel to the base portion 51, facilitating deformation of the elastic member 50 in the first direction X.

In some embodiments, the first side wall 43 is provided with a first fixing portion 431. Along the first direction X, a projection of the first connecting section 54 overlaps a projection of the first fixing portion 431. The first connecting section 54 is fixed to the first fixing portion 431.

In some embodiments, the second side wall 44 is provided with a second fixing portion 441. Along the first direction X, a projection of the first connecting section 54 overlaps a projection of the second fixing portion 441. The first connecting section 54 is fixed to the second fixing portion 441.

In some embodiments, the first fixing portion 431 is closer to the cell unit 10 than the first connecting section 54, facilitating the fixation of the first fixing portion 431 to the first connecting section 54.

In some embodiments, the second fixing portion 441 is closer to the cell unit 10 than the first connecting section 54, facilitating the fixation of the second fixing portion 441 to the first connecting section 54.

In some embodiments, the structural strength of the first side wall 43 is higher than the structural strength of the elastic member 50, reducing the risk of deformation of the first side wall 43 caused by the force applied to the third bent portion 52.

In some embodiments, the structural strength of the second side wall 44 is higher than the structural strength of the elastic member 50, reducing the risk of deformation of the second side wall 44 caused by the force applied to the third bent portion 52.

In some embodiments, the first side wall 43 has a thickness greater than the maximum thickness of the base portion 51, the third bent portion 52, and the first connecting section 54, enhancing the structural strength of the first side wall 43 and reducing the risk of deformation of the first side wall 43 due to the force applied on the third bent portion 52.

In some embodiments, the second side wall 44 has a thickness greater than the maximum thickness of the base portion 51, the third bent portion 52, and the first connecting section 54, enhancing the structural strength of the second side wall 44 and reducing the risk of deformation of the second side wall 44 due to the force applied on the third bent portion 52.

In an embodiment, the bottom wall 46 is provided with a third fixing portion 46a. Along the first direction X, a projection of the bottom wall 46 overlaps a projection of the third fixing portion 46a. The second connecting section 55 is fixed to the third fixing portion 46a. The fixation method may include, for example, welding fixation, adhesive fixation, abutting fixation, clamping fixation, screw fixation, and the like.

In some embodiments, the third fixing portion 46a is closer to the cell unit 10 than the second connecting section 55, facilitating the fixation of the third fixing portion 46a to the second connecting section 55.

In some embodiments, the structural strength of the bottom wall 46 is higher than the structural strength of the elastic member 50, reducing the risk of deformation of the bottom wall 46 caused by the force applied to the third bent portion 52.

In some embodiments, the bottom wall 46 has a thickness greater than the maximum thickness of the base portion 51, the fourth bent portion 53, and the second connecting section 55, enhancing the structural strength of the bottom wall 46 and reducing the risk of deformation of the bottom wall 46 due to the force applied on the fourth bent portion 53.

In some embodiments, the third bent portion 52 includes a first bent section 521 and a second bent section 522. The first bent section 521 is connected to the base portion 51, and the second bent section 522 is connected to the first bent section 521 and the first connecting section 54. The first bent section 521 and the base portion 51 form a first included angle A₁, the second bent section 522 and the first connecting section 54 form a second included angle B₁, and the first bent section 521 and the second bent section 522 form a third included angle C₁, where A₁ ≥ B₁. This is conducive to increasing the ability of the first bent section 521 to resist deformation and reducing the risk of deformation of the elastic member 50 in the first direction X.

In some embodiments, C₁ > A₁. This is conducive to enhancing uniformity of deformation of the third bent portion 52.

In some embodiments, C₁ = 2B₁ = 2A₁. This is conducive to further improving uniformity of deformation of the third bent portion 52.

In some embodiments, the fourth bent portion 53 includes a third bent section 531 and a fourth bent section 532. The third bent section 531 is connected to the base portion 51, and the fourth bent section 532 is connected to the third bent section 531 and the second connecting section 55. The third bent section 531 and the base portion 51 form a first included angle A₂, the fourth bent section 532 and the second connecting section 55 form a second included angle B₂, and the third bent section 531 and the fourth bent section 532 form a third included angle C₂. A₂ ≥ B₂. This is conducive to increasing the ability of the third bent section 531 to resist deformation and reducing the risk of deformation of the elastic member 50 in the first direction X.

In some embodiments, C₂ > A₂. This is conducive to improving uniformity of deformation of the fourth bent portion 53.

In some embodiments, C₂ = 2B₂ = 2A₂. This is conducive to further improving uniformity of deformation of the fourth bent portion 53.

Optionally, the fourth bent portion 53 is set to the same angle as the third bent portion 52. When stressed, the third bent portion 52 and the fourth bent portion 53 can be stressed uniformly and deform uniformly, reducing the risk of rotation of the elastic member 50 caused by non-uniform deformation. Optionally, A₁ = A₂, B₁ = B₂, and C₁ = C₂.

In some embodiments, the battery module 100 includes a buffer member 60, where the buffer member 60 is disposed between the elastic member 50 and the outermost battery cell 11. The buffer member 60 is in contact connection with the base portion 51 and the body portion 111 of the outermost battery cell 11. When the battery cell 11 swells, the buffer member 60 can be compressed, further providing swelling space for the battery cell 11 and further applying pressure to the battery cell 11. Optionally, the buffer member 60 includes foam.

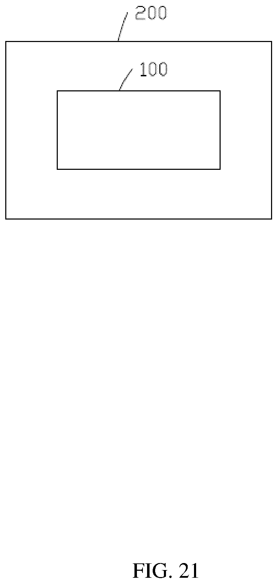

Refer to FIGs. 1 and 21. In an embodiment, the bottom wall 46 is provided with a third limiting portion 461 and a fourth limiting portion 462, where the third limiting portion 461 extends along the first direction X, and the fourth limiting portion 462 extends along the first direction X. The third limiting portion 461 and the fourth limiting portion 462 are arranged along the second direction Y. The third limiting portion 461 and the fourth limiting portion 462 protrude from a surface of the bottom wall 46 facing the top wall 45 along a direction opposite to the third direction Z. When the bracket 12 is disposed in the housing 40, the bracket 12 is located between the third limiting portion 461 and the fourth limiting portion 462. The movement of the cell unit 10 is guided through the third limiting portion 461 and the fourth limiting portion 462. The third limiting portion 461 and the fourth limiting portion 462 can restrict the movement of the bracket 12 along the second direction Y, facilitating the movement of the bracket along the first direction X.

Refer to FIG. 1. In an embodiment, the top wall 45 is provided with a fifth limiting portion 451 and a sixth limiting portion 452, where the fifth limiting portion 451 extends along the first direction X, and the sixth limiting portion 452 extends along the first direction X. The fifth limiting portion 451 and the sixth limiting portion 452 are arranged along the second direction Y. The third limiting portion 461 and the fifth limiting portion 451 are disposed along the third direction Z, and the fourth limiting portion 462 and the sixth limiting portion 452 are disposed along the third direction Z. The fifth limiting portion 451 and the sixth limiting portion 452 protrude from a surface of the top wall 45 facing the bottom wall 46 along the third direction Z. When the bracket 12 is disposed in the housing 40, the bracket 12 is located between the fifth limiting portion 451 and the sixth limiting portion 452. The movement of the cell unit 10 is further guided through the fifth limiting portion 451 and the sixth limiting portion 452. When the battery cell 11 swells, the fifth limiting portion 451 and the sixth limiting portion 452 can restrict the movement of the bracket 12 along the second direction Y, facilitating the movement of the bracket 12 along the first direction X.

Refer to FIG. 22. This application further provides an electric device 200 using the foregoing battery module 100. In an embodiment, the electric device 200 in this application may be, but is not limited to, an electronic device, a drone, a backup power source, an electric automobile, an electric motorcycle, an electric motor bicycle, an electric tool, or a large household battery module.

Those of ordinary skill in the art should appreciate that the foregoing some embodiments are for description of this application only but not for limiting this application. Appropriate modifications and variations made to some embodiments without departing from the essential spirit and scope of this application all fall within the scope of this application.

## Claims

1. A battery module (100), comprising:
a plurality of cell units (10) arranged along a first direction (X), each cell unit (100) comprising a battery cell (11) and a bracket (12); wherein the battery cell (11) comprises an electrode assembly (11b), a cell housing (11a), and an electrode terminal (11c); the electrode terminal (11c) is connected to the electrode assembly (11b) and extends out of the cell housing (11a); wherein
the cell housing (11a) comprises a body portion (111) and a first sealing portion (112), and the electrode assembly (11b) is disposed in the body portion (111);
the first sealing portion (112), comprises a first connecting portion (112a), and the electrode terminal (11c) extends out of the cell housing (11a) from the first connecting portion (112a); and
the bracket (12) comprises a first portion (121), the first portion (121) covering a part of the first connecting portion (112a), and the electrode terminal (11c) extending out of the first portion (121); and
the battery module further comprises an acquisition assembly (20), comprising a lead (21) and a plurality of sampling parts (22), wherein the lead (21) is connected to each of the sampling parts (22); and
the electrode terminals (11c) of two adjacent battery cells (11) are stacked and connected, and the sampling part (22) is connected to any one of the interconnected electrode terminals (11c).

2. The battery module (100) according to claim 1, wherein the bracket (12) of at least one of the plurality of cell (10) units comprises a second portion (127), and a part of the electrode terminal (11c) and the second portion (127) are arranged along the first direction (X), the sampling part (22) is connected to the second portion (127) and the electrode terminal (11c).

3. The battery module (100) according to claim 2, wherein the second portion (127) is connected to the first portion (121), and the first portion (121) and the second portion (127) are arranged along a second direction (Y), the first direction (X) being perpendicular to the second direction (Y); and
along the first direction (X), one side of the sampling part (22) is connected to any one of the interconnected electrode terminals (11c), and another side of the sampling part (22) is connected to the second portion (127).

4. The battery module (100) according to claim 2 or 3, wherein the second portion (127) is provided with a step portion (127c), the step portion (127c) comprising a first step surface (1271) and a second step surface (1272); wherein along the first direction (X), the first step surface (1271) has a thickness less than a thickness of the second step surface (1272); and
along the first direction (X), a projection of the electrode terminal (11c) overlaps a projection of the first step surface (1271), the projection of the electrode terminal (11c) is spaced apart from a projection of the second step surface (1272), and the sampling part (22) is connected to the step portion (127c).

5. The battery module (100) according to any one of claims 2 to 4, wherein the second portion (127) is provided with a flat portion (127d), wherein the flat portion (127d) is connected to any one of the interconnected electrode terminals (11c), and a part of the electrode terminal (11c) is disposed between the flat portion (127d) and the sampling part (22).

6. The battery module (100) according to any one of claims 2 to 5, wherein the sampling part (22) comprises a first component (221) and a second component (222); along the first direction (X), the first component (221) is connected to the second portion (127), and the second component (222) is connected to any one of the interconnected electrode terminals (11c).

7. The battery module (100) according to claim 6, wherein the first component (221) comprises a first segment (221a), and the second component (222) comprises a second segment (222a); the first segment (221a) is bent toward the second segment (222a), the second segment (222a) is flat, the first segment (221a) is connected to the first step surface (1271), and the second segment (222a) is connected to the flat portion (127d).

8. The battery module (100) according to claim 6, wherein the first component (221) comprises a first segment (221a), and the second component (222) comprises a second segment (222a); the first segment (221a) is bent toward the second segment (222a), the second segment (222a) is bent toward the first segment (221a), the first segment (221a) is connected to the first step surface (1271), and the second segment (222a) is connected to the flat portion (127d).

9. The battery module (100) according to claim 7 or 8, wherein the first component (221) comprises a third segment (221b), the third segment (221b) is connected to the first segment (221a); and
the third segment (221b) is provided with a first curved portion (2211), the step portion (127c) is provided with a first limiting portion (1272a), the first curved portion (2211) is disposed in the first limiting portion (1272a), and the first curved portion (2211) is configured to restrict the sampling part (22) from detaching from the second portion (127).

10. The battery module (100) according to claim 9, wherein the second component (222) comprises a fourth segment (222b), wherein the fourth segment (222b) is connected to the second segment (222a); and the fourth segment (222b) is provided with a second curved portion (2221);
the flat portion (127d) is provided with a second limiting portion (1276), the second curved portion (2221) is disposed in the second limiting portion (1276), and the second curved portion (2221) is configured to restrict the sampling part (22) from detaching from the second portion (127).

11. The battery module (100) according to claim 10, wherein the first limiting portion (1272a) is disposed on the second step surface (1272); and along a third direction (Z), the second limiting portion (1276) is disposed on a part of the flat portion (127d) extending beyond the electrode terminal (11c); the first direction (X), the second direction (Y), and the third direction (Z) being perpendicular to each other.

12. The battery module (100) according to any one of claims 2 to 11, wherein the bracket (12) comprises a third connecting portion (128), the third connecting portion (128) is connected to the second portion (127), the third connecting portion (128) is connected to the first portion (121);
along the first direction (X), the third connecting portion (128) is connected to a part of the electrode terminal (11c) extending out of the cell housing (11a).

13. The battery module according to any one of claims 1 to 12, wherein the bracket (22) is integrally formed with the battery cell (11).

14. The battery module (100) according to any one of claims 1 to 13, wherein the sampling part (22) is fixed to the first portion (121).

15. An electric device (200), comprising the battery module (100) according to any one of claims 1 to 14.
